# EUROPÄISCHE PATENTSCHRIFT

(11) **EP 3 167 435 B1**
(45) Veröffentlichungstag und Bekanntmachung des Hinweises auf die Patenterteilung: **11.09.2019**
(21) Anmeldenummer: 15742198.3
(22) Anmeldetag: 10.07.2015
(51) Int. Cl.: G06T 19/00, A41H 3/00

(54) **VERFAHREN UND VORRICHTUNG ZUR ANORDNUNG GRAFISCHER GESTALTUNGSELEMENTE AUF EINEM SITZBEZUG EINES FAHRZEUGSITZES**
METHOD AND DEVICE FOR ARRANGING GRAPHICAL DESIGN ELEMENTS ON A SEAT COVER OF A VEHICLE SEAT
PROCÉDÉ D'AGENCEMENT D'ÉLÉMENTS DE CONCEPTION GRAPHIQUES SUR UNE HOUSSE DE SIÈGE D'UN SIÈGE DE VÉHICULE

(30) Priorität: 11.07.2014 DE 102014213559
(43) Veröffentlichungstag der Anmeldung: 17.05.2017
(73) Patentinhaber: Adient Luxembourg Holding S.à r.l., 1855 Luxembourg (LU)
(72) Erfinder: OLDACH, Sven, 42857 Remscheid (DE); GRIES, Petra, 42929 Wermelskirchen (DE)
(74) Vertreter: Finger, Catrin
(86) Internationale Anmeldenummer: PCT/EP2015/065867
(87) Internationale Veröffentlichungsnummer: WO 2016/005575

(56) Entgegenhaltungen:
- WO-A1-2005/051113
- WO-A2-02/057964
- JP-A- 2000 235 589
- US-A- 6 144 890
- US-A1- 2001 026 272
- IGARASHI T ET AL: "ADAPTIVE UNWRAPPING FOR INTERACTIVE TEXTURE PAINTING", PROCEEDINGS OF THE 2001 SYMPOSIUM ON INTERACTIVE 3D GRAPHICS. RESEARCH TRIANGLE PARK, NC, MARCH 19 - 21, 2001; [PROCEEDINGS OF THE SYMPOSIUM ON INTERACTIVE 3D GRAPHICS], NEW YORK, NY : ACM, US, 19. März 2001 (2001-03-19), Seiten 209-216, XP001113648, DOI: 10.1145/364338.364404 ISBN: 978-1-58113-292-2

## Beschreibung

Die Erfindung betrifft ein Verfahren und eine Vorrichtung zur Anordnung grafischer Gestaltungselemente auf einem Sitzbezug eines Fahrzeugsitzes.

Aus dem Stand der Technik sind Verfahren bekannt, mit denen gestaltgebende Zeichnungen, beispielsweise Muster, auf Textilien zur Überdeckung gekrümmter und/oder verformbarer Oberflächen zu übertragen.

Aus der DE 100 63 505 A1 sind ein Verfahren und eine Vorrichtung zur Konstruktion eines Fahrzeugsitzes, bestehend aus einem Polsterkörper und einem Polsterbezug mittels einer Datenverarbeitungsanlage bekannt. Dabei wird ein Polsterbezug auf der Grundlage einer digitalisierten Soll-Kontur eines Sitzpolsters entwickelt, wobei Einflüsse aus dem Beziehen des Sitzpolsters mit dem Polsterbezug berücksichtigt werden.

Die DE 10 2012 101 428 A1 beschreibt ein Verfahren zur Erstellung eines Bekleidungsschnitts, bei welchem der Körper einer Person zur Erzeugung eines dreidimensionalen Körpermodells abgescannt wird. Auf dem dreidimensionalen Körpermodell werden virtuelle Koordinaten zur Simulation eines Kleidungsstücks erzeugt, dessen relative Maße in eine zweidimensionale Darstellung abgewickelt werden.

In ähnlicher Weise zur DE 10 2012 101 428 A1 offenbart die DE 10 2006 046 709 A1 ein Verfahren zur Herstellung maßgeschneiderter Bekleidungsstücke, wobei ein Vorlage-Bekleidungsstück hinsichtlich der Maße erfasst wird, gegebenenfalls Abänderungen von den aufgenommenen Maßen durchgeführt werden und Material, insbesondere Stoff, nach Materialstruktur und Farbe ausgewählt wird sowie die so festgelegten Produktionsdaten zu einem Herstellungsort übermittelt werden und am Herstellungsort das maßgeschneiderte Bekleidungsstück auf Basis der Produktionsdaten produziert wird.

US 8,014,001 B2 offenbart ein Verfahren zur Entwicklung kundenspezifischer Sitzpolster, bei dem sich ein Benutzer auf einem Prüfsitz niederlässt und die dadurch bewirkten Deformationen im Prüfsitz eingefroren und vermessen werden, nachdem der Benutzer den Prüfsitz verlassen hat.

US 5,255,352 offenbart ein Verfahren zur Gestaltung mathematisch definierter dreidimensionaler Oberflächen, bei dem Gestaltungselemente auf einem Oberflächengestaltungsbild so angeordnet werden, dass sie in der für die dreidimensionale Oberfläche gewünschten Gestalt erscheinen. Hierzu wird in einem Zwischenschritt das Oberflächengestaltungsbild auf eine zweidimensionale Oberflächenabwicklung der dreidimensionalen Oberfläche abgebildet und anschließend auf die dreidimensionale Oberfläche übertragen.

US 5,107,444 beschreibt ein Verfahren zur Abwicklung einer dreidimensionalen Oberfläche in eine zweidimensionale Oberflächenabwicklung. Dabei wird aus der dreidimensionalen Oberfläche ein dreidimensionales Gitter gewonnen, mit dem Oberflächenelemente definiert werden. Solche Oberflächenelemente werden gruppenweise auf die Oberflächenabwicklung abgebildet und dort zusammengesetzt. Punkte der Oberflächenelemente auf der Oberflächenabwicklung werden rekursiv so angepasst, dass Fehler in der Oberflächenabwicklung korrigiert werden und eine optimale Lösung erzielt wird. Dem Nutzer werden Werkzeuge angeboten, mit denen die Korrektheit der Oberflächenabwicklung ermittelt werden kann. Zur weiteren Verbesserung kann der Nutzer die Oberflächenabwicklung modifizieren, beispielsweise durch Einfügen von Abnähern.

In der US 6,144,890 wird ein Entwurfsverfahren für ein Polsterteil, beispielsweise einen Fahrzeugsitz, offenbart, mit dem Vorlagen für die Vervielfältigung von Bezugsmaterial und Füllmaterial aus einem angepasstem Datenmodell erzeugt werden, um Prototypen eines Polsterteils in kürzeren Entwicklungszyklen zu erstellen. Das Datenmodell kann unter anderem Daten zum Rahmen, zum Fahrzeug, zu ergonomischen Randbedingungen, zu Verpackungsanforderungen, zu Verkleidungen und/oder zu Rückhaltesystemen umfassen. Mittels einer grafischen Anzeigevorrichtung werden Darstellungen eines Fahrzeugsitzes, beispielsweise fotorealistische hochaufgelöste Darstellungen vieler Aspekte seines endgültigen Erscheinungsbilds, angezeigt. Hierzu zählen Darstellungen der Gewebestruktur, der Oberflächenstruktur von Plastikteilen, von Einschnürungen und/oder von Nahtformen.

WO 02/057964 A2 beschreibt Verfahren und Vorrichtungen zur Modellierung und Anpassung von Gewebestoffen, welche als Grundlage für einen "virtuellen Zuschnitt" dienen. Die Gewebestoffmodelle stellen Beziehungen zwischen spezifischen Markierungspunkten auf dem Gewebestoff und spezifischen Körperregionen mittels expliziter dreidimensionaler Abbildungsvorschriften her.

Aufgabe der vorliegenden Erfindung ist es, ein verbessertes Verfahren und eine verbesserte Vorrichtung zur vereinfachten Anordnung grafischer Gestaltungselemente auf einem Sitzbezug eines Fahrzeugsitzes unter Berücksichtigung von ortsabhängig unterschiedlichen Dehnungen anzugeben.

Die Aufgabe wird erfindungsgemäß hinsichtlich des Verfahrens durch die Merkmale des Anspruchs 1 und hinsichtlich der Vorrichtung durch die Merkmale des Anspruchs 8 gelöst.

Ein Verfahren zur Anordnung grafischer Gestaltungselemente auf einem Sitzbezug eines Fahrzeugsitzes sieht vor, dass ein dreidimensionales Sitzbezugmodell eines zweidimensionalen Sitzbezuges eines realen Fahrzeugsitzes erfasst wird und dieses Sitzbezugmodell mittels einer UV-Transformation in eine zweidimensionale Zuschnittmodellabwicklung umgewandelt wird, in welcher zweidimensionale Gestaltungselemente erstellt werden, wobei die erstellten Gestaltungselemente zusätzlich in dem dreidimensionalen Sitzbezugmodell ausgegeben werden. Durch eine solche 3D-Modellierung eines Sitzbezuges, zum Beispiel 3D-Erfassung, wie Scannen, und Abwickeln dieses 3D-Modells auf eine 2D-Ebene und Aufbringen von 2D-Gestaltungselementen, wie Muster, mit entsprechender Verzerrung in der 2D-Ebene des Sitzbezuges sowie Ausgabe der 2D-Gestaltungselemente in dem 3D-Modell des Sitzbezuges können die Gestaltungselemente in Bezug auf den realen Sitzbezug oder umgekehrt kann der Sitzbezug in Bezug auf die Gestaltungselemente getrimmt, insbesondere angepasst werden. Insbesondere können die Gestaltungselemente relativ zum Sitzbezug ausgegeben, beispielsweise visualisiert, und lagerichtig positioniert, insbesondere deren Position angepasst, werden. Eine weitere Ausführungsform sieht vor, dass der Sitzbezug in Bezug auf die Gestaltungselemente lagerichtig positioniert, insbesondere seine Position, angepasst wird.

Im Detail umfasst das Verfahren in einer möglichen Ausführungsform:
- in einem ersten Verfahrensschritt die Erstellung eines dreidimensionalen Sitzbezugmodells mit mindestens zwei dreidimensionalen, mittels mindestens einer Naht verbundenen Zuschnittmodellen und die Visualisierung des dreidimensionalen Sitzbezugmodells mittels eines computergestützten Entwurfswerkzeugs,
- in einem zweiten Verfahrensschritt die Anordnung von zu den mindestens zwei Zuschnittmodellen korrespondierenden Zuschnittteilen in mindestens einer Zuschnittzeichnungsfläche, welche in einer vorbestimmten Darstellungsform auf einem Zuschnittzeichnungsflächenausgabebereich eines Ausgabegeräts mittels eines Zeichenwerkzeugs dargestellt wird,
- in einem dritten Verfahrensschritt die Erstellung mindestens einer UV - Transformation zur Abbildung dreidimensionaler Modellpunktkoordinaten eines Zuschnittmodells auf zweidimensionale Zuschnittzeichnungsflächenpunktkoordinaten einer Zuschnittmodellabwicklung, die in der Abwicklungsaußenkontur im Wesentlichen mit der Zuschnittteilaußenkontur des korrespondierenden Zuschnittteils übereinstimmt,
- in einem vierten Verfahrensschritt die Zuordnung mindestens eines Zuschnittzeichnungsflächenausgabebereichs zur Darstellung von Texturen auf dem dreidimensionalen Sitzbezugmodell mittels eines mit dem computergestützten Entwurfswerkzeug verbundenen Texturdarstellungswerkzeugs sowie
- in einem fünften Verfahrensschritt die Positionierung mindestens eines grafischen Gestaltungselements mittels des Zeichenwerkzeugs auf mindestens einem Zuschnittteil, wobei mittels des mit dem computergestützten Entwurfswerkzeug verbundenen Texturdarstellungswerkzeugs eine Abbildung des grafischen Gestaltungselements gemäß der UV - Transformation des korrespondierenden Zuschnittsmodells auf dem dreidimensionalen Sitzbezugmodell dargestellt wird.

Mittels der UV - Transformation zur Abbildung dreidimensionaler Modellpunktkoordinaten eines Zuschnittmodells auf zweidimensionale Zuschnittzeichnungsflächenpunktkoordinaten einer Zuschnittmodellabwicklung, die in der Außenkontur im Wesentlichen mit der Außenkontur des korrespondierenden Zuschnittteils übereinstimmt, ist es in vorteilhafter Weise möglich, eine geometrische Korrespondenz in der Art einer Koordinatentransformation zwischen einem Zuschnittteil und einem dreidimensionalen Sitzbezugmodell herzustellen. Damit ist es möglich, das Aussehen eines Gestaltungselements, beispielsweise einer Textur oder eines Ornaments, auf einem auf einen Fahrzeugsitz aufgezogenen Sitzbezug realitätsgetreu oder realitätsnah darzustellen. Somit ist es auch möglich, Gestaltungselemente entsprechend eines gewünschten Aussehens und einer gewünschten Wirkung zu gestalten und anzuordnen. Insbesondere ist es möglich, über mehrere Bezugteile eines Sitzbezugs reichende Gestaltungselemente so auf Zuschnittteilen anzuordnen, dass eine Verzerrung und/oder ein Versatz des Gestaltungselements an Grenzen der Bezugteile und/oder an Nähten, über welche Zuschnittteile zu einem Bezugteil verbunden werden, vermieden oder wenigstens minimiert wird. Gegenüber Verfahren nach dem Stand der Technik entfällt in Kosten und Arbeitszeit sparender Weise die Fertigung physikalischer Sitzbezüge aus probeweise mit Gestaltungselementen versehenen physikalischen Zuschnittteilen.

In einer Ausführungsform des Verfahrens wird ein dreidimensionales Sitzbezugmodell mindestens teilweise durch Abtastung der Oberfläche eines mit einem Sitzbezug bezogenen Fahrzeugsitzes und der in diesem Sitzbezug enthaltenen Nähte erstellt und nachfolgend entlang der Nähte in dreidimensionale Zuschnittmodelle aufgetrennt. Es ist beispielsweise möglich, hierzu einen physikalisch verfügbaren Fahrzeugsitz (= Ist-Fahrzeugsitz) ohne Kunststoffblenden zu verwenden. In vorteilhafter Weise werden damit mit hoher Genauigkeit die Form eines dreidimensionalen Sitzbezugmodells sowie die genaue Lage von Nähten und somit auch von Zuschnittteilen, welche über Nähte zu einem Bezugteil verbunden sind, auf einem vorhandenen Fahrzeugsitz (= Ist-Fahrzeugsitz) erfasst. Gegenüber der Verwendung beispielsweise eines dreidimensionalen Flächendatensatzes aus einen computergestützten Konstruktionsprozess (CAD - Prozess) bietet diese Ausführungsform der Erfindung den Vorteil wesentlich genauerer Übereinstimmung mit dem physikalischen Modell.

In einer Ausführungsform des Verfahrens wird im dritten Verfahrensschritt
- in einem ersten Teilschritt zu mindestens einem dreidimensionalen Zuschnittmodell mittels einer UV - Transformation eine erste zweidimensionale Zuschnittmodellabwicklung erstellt,
- in einem zweiten Teilschritt die Abwicklungsaußenkontur der Zuschnittmodellabwicklung durch Verschiebung mindestens eines Markierungspunkts an die Zuschnittteilaußenkontur des korrespondierenden Zuschnittteils angepasst und
- werden in einem dritten Teilschritt die Parameter der UV - Transformation und somit die Abwicklungsaußenkontur der Zuschnittmodellabwicklung an die Verschiebung des mindestens einen Markierungspunkts angepasst.

Der zweite und dritte Teilschritt werden wiederholt, bis die Abweichung der Abwicklungsaußenkonturen der Zuschnittmodellabwicklung von der Zuschnitteilaußenkontur des Zuschnittteils ein vorbestimmtes Abweichungsmaß unterschreitet.

Danach werden in einem vierten Teilschritt sichtbare Nähmarkierungen auf Zuschnittteilen beidseits einer verbindenden Naht entlang einer zur Nahtrichtung senkrechten Fluchtrichtung näherungsweise in Flucht gebracht.

In vorteilhafter Weise werden durch die Angleichung der Nähmarkierungen auf angrenzenden, über eine Naht verbundenen Zuschnittteilen die individuellen UV - Transformationen für diese Zuschnittteile so abgeglichen beziehungsweise angepasst, dass entlang einer Naht auf beiden Zuschnittteilen gegenüberliegende Zuschnittzeichnungsflächenpunkte auch auf mindestens näherungsweise gegenüberliegende Modellpunkte auf dem Sitzbezugmodell abgebildet werden. Somit wird ein Versatz von Gestaltungselementen, die sich über mehrere Zuschnittteile erstrecken, entlang verbindender Nähte vermieden.

In einer Ausführungsform des Verfahrens umfasst der Sitzbezug als Bezugteile einen inneren Rückenlehnenbezug, einen Sitzkissenbezug, einen äußeren Rückenlehnenbezug sowie einen Kopfstützenbezug, wobei die einem Bezugteil zugeordneten Zuschnittteile auf einer Zuschnittzeichnungsfläche angeordnet sind.

In einer Ausführungsform des Verfahrens wird ein Zuschnittteil auf eine Zuschnittzeichnungsfläche in einem Abbildungsmaßstab 1:1 abgebildet. Dabei ist es möglich, mindestens eine Zuschnittzeichnungsfläche quadratisch mit einer Kantenlänge von 4096 Pixeln zu gestalten. In besonders vorteilhafter Weise ist damit eine detaillierte Gestaltungsarbeit möglich, während zugleich die Übersicht über die gestalteten Zuschnittteile eines Bezugteils und/oder eines Sitzbezugs gewahrt bleibt.

In einer Ausführungsform des Verfahrens sind Zuschnittteile auf einer Zuschnittzeichnungsfläche symmetrisch angeordnet. In vorteilhafter Weise wird damit eine erleichterte und schnellere Gestaltungsarbeit beim Aufbringen von Gestaltungselementen auf Zuschnitteile ermöglicht.

Eine Vorrichtung zur Anordnung grafischer Gestaltungselemente auf einem Sitzbezug eines Fahrzeugsitzes umfasst eine Verarbeitungseinheit und eine mit der Verarbeitungseinheit verbundene erste und zweite Anzeigevorrichtung, wobei die Verarbeitungseinheit mittels mindestens eines Datenverarbeitungsprogramms als computergestütztes Entwurfswerkzeug, als Zeichenwerkzeug sowie als Texturdarstellungswerkzeug ausgebildet ist und wobei die Visualisierung des dreidimensionalen Sitzbezugmodells auf der ersten Anzeigevorrichtung erfolgt und der mindestens eine Zuschnittzeichnungsflächenausgabebereich auf der zweiten Anzeigevorrichtung angeordnet ist.

In vorteilhafter Weise ist es mit den zwei Anzeigevorrichtungen beispielsweise möglich, grafische Gestaltungselemente auf Zuschnittteile aufzubringen und auf der zweiten Anzeigevorrichtung zu visualisieren und zugleich instantan, insbesondere ohne Wechsel in ein anderes Datenverarbeitungsprogramm, die Anordnung und die gestalterische Wirksamkeit der Gestaltungselemente auf dem dreidimensionalen Sitzbezugmodell auf der ersten Anzeigevorrichtung zu verfolgen und zu bewerten.

Weitere Details und Ausführungsbeispiele der Erfindung werden im Folgenden anhand von Zeichnungen näher erläutert.

Dabei zeigen
- Figur 1: eine schematische Übersicht zum Verfahren und zu den im Verfahren verwendeten Werkzeugen und Koordinatensystemen,
- Figur 2: schematisch einen als Vordersitz ausgebildeten Fahrzeugsitz mit einem Sitzbezug,
- Figur 3: schematisch die Anordnung von Zuschnittteilen für ein Bezugteil für einen solchen Sitzbezug,
- Figur 4: schematisch den Ablauf eines Verfahrens zur Erstellung einer gestaltgebenden Zeichnung mit Gestaltungselementen für einen solchen Sitzbezug,
- Figur 5a: schematisch ein dreidimensionales Sitzbezugmodell bestehend aus dreidimensionalen Zuschnittmodellen,
- Figur 5b: daraus gewonnene zweidimensionale Zuschnittmodellabwicklungen mit zugeordneten Zuschnittteilen,
- Figur 6: schematisch die Anordnung und Ausrichtung von Nähmarkierungen sowie
- Figur 7: schematisch zwei Anzeigevorrichtungen zur Durchführung des erfindungsgemäßen Verfahrens.

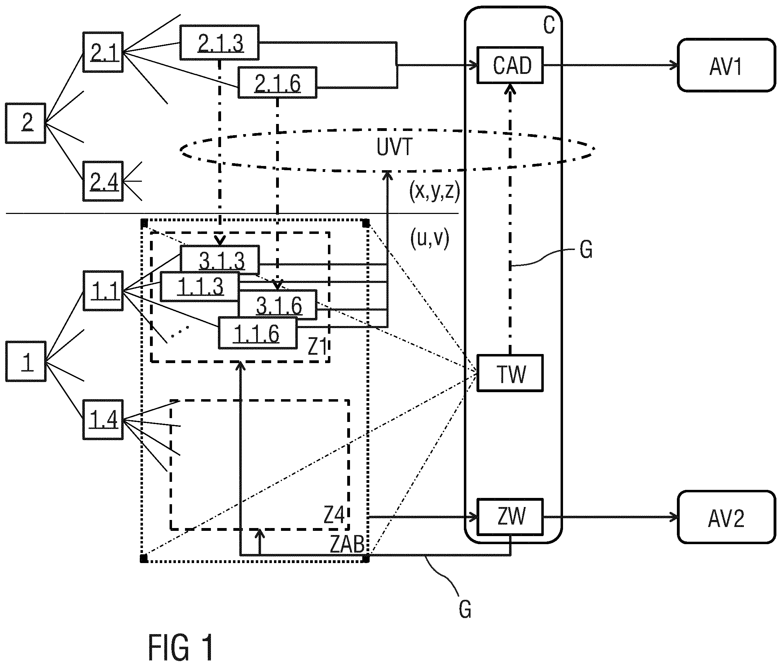

**Figur 1** erklärt den Ablauf des Verfahrens übersichtsartig. Ein Sitzbezug 1 (Ist-Sitzbezug) umfasst Bezugteile 1.1 bis 1.4 (Ist-Bezugsteile). Jedes Bezugteil 1.1 bis 1.4 umfasst mindestens ein Zuschnittteil 1.1.1 bis 1.1.7 (Ist-Zuschnittteil), die sich in einem zweidimensionalen ebenen UV - Koordinatensystem (u,v) darstellen lassen. In Figur 1 sind beispielhaft nur zwei Zuschnittteile 1.1.3, 1.1.6 des Bezugteils 1.1 schematisch dargestellt.

Von einem auf einen realen Fahrzeugsitz aufgezogenen Sitzbezug 1 ist ein beispielsweise dreidimensionales Sitzbezugmodell 2 in einem dreidimensionalen räumlichen Modell- oder XYZ - Koordinatensystem (x,y,z) ermittelbar, beispielsweise scannbar oder aus einem Foto ableitbar. Das ermittelte dreidimensionale Sitzbezugmodell 2 kann dabei mehrere dreidimensionale Bezugteilmodelle 2.1 bis 2.4 umfassen, die insbesondere mit den aufgezogenen Bezugteilen 1.1 bis 1.4 korrespondieren. Jedes dreidimensionale Bezugteilmodell 2.1 bis 2.4 kann wiederum aus dreidimensionalen Zuschnittmodellen 2.1.1 bis 2.1.7 korrespondierend zu den zweidimensionalen Zuschnittteilen 1.1.1 bis 1.1.7 gebildet sein, wobei beispielhaft nur zwei Zuschnittmodelle 2.1.3, 2.1.6 dargestellt sind.

Die Bearbeitung des ermittelten dreidimensionalen Sitzbezugmodells 2 und seiner Komponenten (dreidimensionale Bezugteilmodelle 2.1 bis 2.4 und Zuschnittmodelle 2.1.1 bis 2.1.7) kann mittels eines CAD-Werkzeugs CAD zum rechnergestützten Entwurf (Computer Aided Design, CAD, Entwurfswerkzeug) erfolgen. Mittels des CAD - Werkzeugs kann das dreidimensionale Sitzbezugmodell 2 ferner auf einer ersten Anzeigevorrichtung AV1 visualisiert werden.

Mittels einer sogenannten als UV-Generierung oder UV-Transformation UVT bezeichneten Koordinatentransformation (geometrisches Modellierungsverfahren, UV-Mapping zur Herstellung eines 2D-Bildes, welches ein 3D-Modell repräsentiert) wird zu jedem dreidimensionalen Zuschnittmodell 2.1.3, 2.1.6 eine zweidimensionale Zuschnittmodellabwicklung 3.1.3, 3.1.6 erzeugt, die beispielhaft für die Zuschnittmodelle 2.1.3, 2.1.6 dargestellt sind.

Sowohl die Zuschnittteile 1.1.3, 1.1.6 als auch die Zuschnittmodellabwicklungen 3.1.3, 3.1.6 werden in einem Zuschnittzeichnungsflächenausgabebereich ZAB dargestellt. In vorteilhafter Weise umfasst der Zuschnittzeichnungsflächenausgabebereich ZAB disjunkte Zuschnittzeichnungsflächen Z1, Z4, die jeweils sowohl die Zuschnittteile 1.1.3, 1.1.6 eines Bezugteils 1.1 bis 1.4 als auch die Zuschnittmodellabwicklungen 3.1.3, 3.1.6 eines dazu korrespondierenden Bezugteilmodells 2.1 bis 2.4 aufnehmen. Somit werden Form und Größe von Zuschnittteilen 1.1.3, 1.1.6 gemäß einem ursprünglichen Zuschnittentwurf vergleichbar gegenüber verzerrten, beispielsweise gedehnten, Zuschnittmodellabwicklungen 3.1.3, 3.1.6, die der Form und Größe eines auf einen Fahrzeugsitz aufgezogenen Zuschnittteils 1.1.3, 1.1.6 entsprechen.

Darüber hinaus werden Außenkonturen 1.1.3.A, 1.1.6.A von Zuschnittteilen 1.1.3, 1.1.6 mit Außenkonturen 3.1.3.A, 3.1.6.A von Zuschnittmodellabwicklungen 3.1.3, 3.1.6 im UV-Koordinatensystem miteinander verglichen und gegebenenfalls angepasst, bis ein vorbestimmtes Maß an Überdeckung zwischen Zuschnittteilen 1.1.3, 1.1.6 und korrespondierenden Zuschnittmodellabwicklungen 3.1.3, 3.1.6 erreicht ist.

Mittels eines Zeichenwerkzeugs ZW können ferner Gestaltungselemente G, beispielsweise Muster oder Texturen, auf Zuschnittzeichnungsflächen Z1, Z4 oder Teile davon im UV-Koordinatensystem aufgetragen werden. Mittels eines solchen Zeichenwerkzeugs ZW ist ferner die mindestens teilweise Ausgabe des Zuschnittzeichnungsflächenausgabebereichs ZAB auf eine zweite Anzeigevorrichtung AV2 möglich.

Mittels eines Texturdarstellungswerkzeugs TW ist es möglich, solche im UV-Koordinatensystem (u,v) erstellten, innerhalb des vorbestimmten Zuschnittzeichnungsflächenausgabebereichs ZAB liegenden Gestaltungselemente G an das CAD-Werkzeug CAD zu übertragen und entsprechend der ermittelten UV-Transformation UVT in der Visualisierung des dreidimensionalen Sitzbezugmodells 2 korrekt, also unter Berücksichtigung beispielsweise lokaler Verzerrungen an Bezugteilen 1.1 bis 1.4 beim Aufziehen eines Sitzbezugs 1 auf einem Fahrzeugsitz, darzustellen. Somit kann das Aussehen solcher Gestaltungselemente G an einem bezogenen Ist-Fahrzeugsitz bewertet und optimiert werden.

Das CAD-Werkzeug CAD, das Texturdarstellungswerkzeug TW sowie das Zeichenwerkzeug ZW sind beispielsweise als Programme auf einer gemeinsamen Verarbeitungseinheit C implementiert und werden auf dieser abgearbeitet. Es sind jedoch auch Ausführungsformen einer Vorrichtung möglich, bei denen die Abarbeitung mindestens eines dieser Werkzeuge auf einer weiteren, hier nicht dargestellten Verarbeitungseinheit erfolgt. Ebenso sind Ausführungsformen möglich, bei denen die Visualisierung des Sitzbezugmodells 2 und die Darstellung des Zuschnittzeichnungsflächenausgabebereichs ZAB gemeinsam auf einer einzigen Anzeigevorrichtung AV1, AV2 erfolgt.

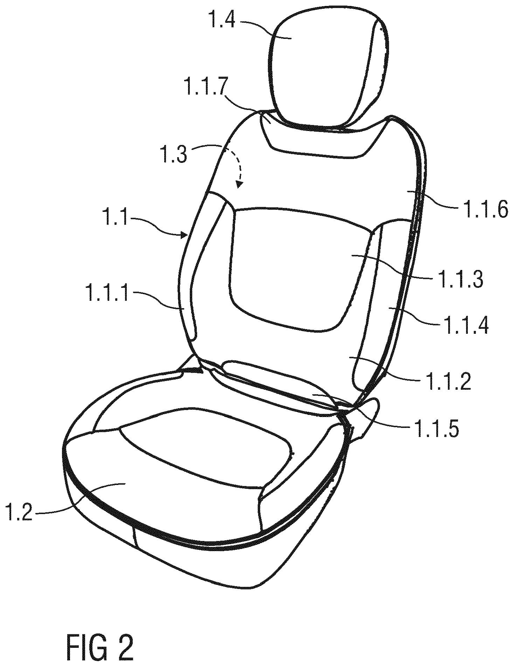

Details des Verfahrens und der Vorrichtung werden im Folgenden anhand der Figuren 2 bis 7 näher erläutert.

**Figur 2** zeigt schematisch einen als Vordersitz ausgebildeten Fahrzeugsitz mit einem **Sitzbezug 1.** Der Sitzbezug 1 umfasst als **Bezugteile 1.1 bis 1.4** einen der Sitzfläche zugewandten **inneren Rückenlehnenbezug 1.1,** einen **Sitzkissenbezug 1.2,** einen von der Sitzfläche weg weisenden **äußeren Rückenlehnenbezug 1.3** sowie einen **Kopfstützenbezug 1.4.** Es ist möglich, dass ein Sitzbezug 1 für einen Fahrzeugsitz 1 in anderen Ausführungsformen, beispielsweise ein Sitzbezug1 für einen als Rücksitz oder Rückbank im Fond ausgebildeten Fahrzeugsitz, andere und/oder weitere Bezugteile aufweist.

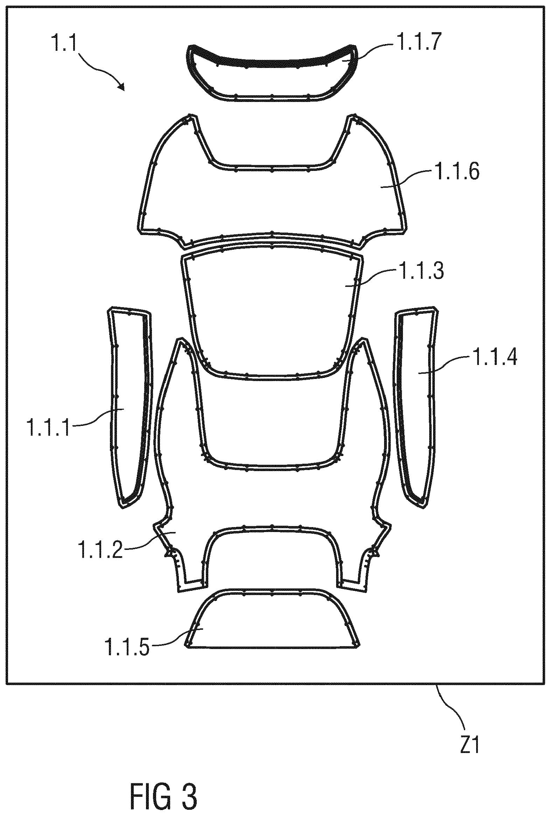

Wie am inneren Rückenlehnenbezug 1.1 beispielhaft dargestellt, kann ein Bezugteil 1.1 bis 1.4 aus mehreren zweidimensionalen Zuschnittteilen 1.1.1 bis 1.1.7 gefertigt werden, die über Nähte N miteinander verbunden sind. **Figur 3** zeigt schematisch die Anordnung solcher Zuschnittteile 1.1.1 bis 1.1.7 auf einer ersten **Zuschnittzeichnungsfläche Z1, Z4** für den inneren Rückenlehnenbezug 1.1, wobei einzelne Zuschnittteile 1.1.1 bis 1.1.7 in aufgetrennter Weise, also ohne verbindende Nähte N, dargestellt sind. Weitere Zuschnittzeichnungsflächen sind dem Sitzkissenbezug 1.2, dem äußeren Rückenlehnenbezug 1.3 beziehungsweise dem Kopfstützenbezug 1.4 zugeordnet und umfassen die Zuschnittteile der jeweiligen Bezugteile 1.1 bis 1.4 in aufgetrennter Darstellung. Die Geometrie und die Abmaße der jeweils dargestellten Zuschnittteile 1.1.1 bis 1.1.7 ergeben sich aus einem dreidimensionalen Flächendatensatz, der der Entwicklung eines Fahrzeugsitzes nach dem Stand der Technik, beispielsweise der Entwicklung mittels eines Computer Aided Design (CAD) Werkzeugs CAD, gewöhnlich zu Grunde liegt.

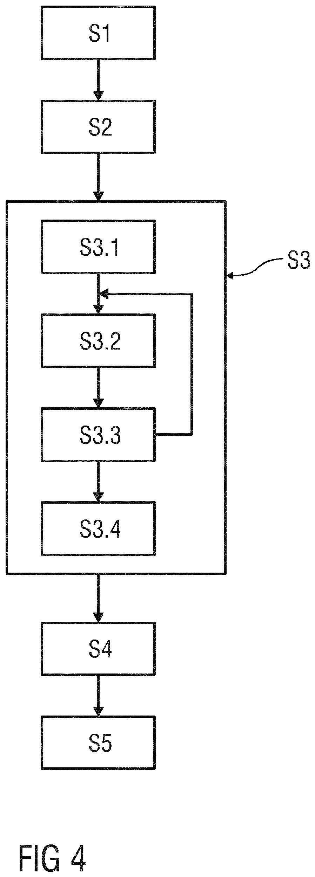

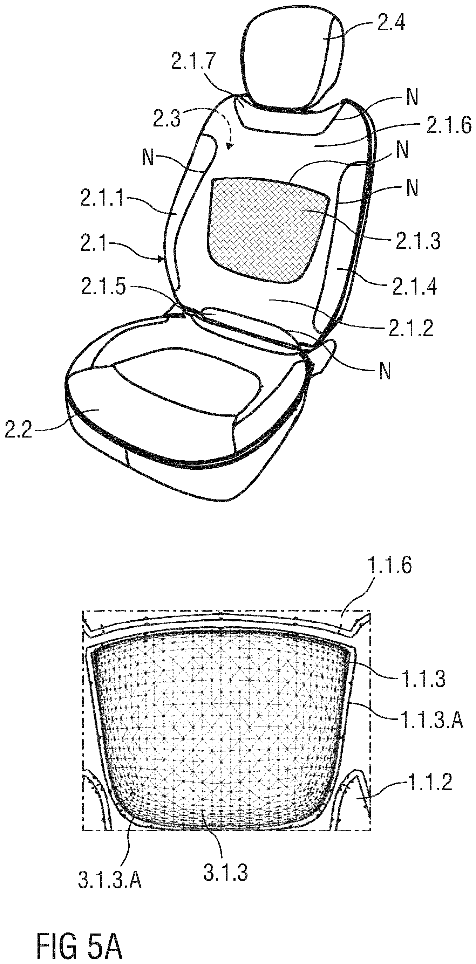

**Figur 4** zeigt schematisch den Ablauf des erfindungsgemäßen Verfahrens. In einem **ersten Verfahrensschritt S1** werden Oberflächenpunkte der Oberfläche eines mit einem Sitzbezug 1 bezogenen **Fahrzeugsitzes** mittels Digitalisierung eines serienhaften physikalischen Modells oder eines Prototyps des Fahrzeugsitzes 1 erfasst. Dabei werden auch die Position und der Verlauf der in Figur 5a näher dargestellten **Nähte N** erfasst.

In vorteilhafter Weise wird die Topographie der Oberfläche des Sitzbezugs 1 mit einer Genauigkeit von etwa +/- 1mm in einer zur Oberfläche des Sitzbezugs 1 senkrechten Abtastrichtung erfasst.

Aus den mittels Abtastung gewonnenen Oberflächenpunkten wird ein geschlossenes dreidimensionales Sitzbezugmodell 2, bestehend aus Bezugteilmodellen 2.1 bis 2.4 korrespondierend zu den Bezugteilen 1.1 bis 1.4, erstellt, wobei ein Bezugteilmodell 2.1 bis 2.4 entlang der Verläufe der Nähte N in dreidimensionale **Zuschnittmodelle 2.1.1 bis 2.1.7** aufgetrennt, wie in Figur 5a näher dargestellt. Da die Auftrennung des geschlossenen dreidimensionalen Sitzbezugmodells 2 entlang der gleichen Nähte N erfolgt wie die Auftrennung der Bezugteile 1.1 bis 1.4 in Zuschnitteile 1.1.1 bis 1.1.7, korrespondiert hierbei jedes dreidimensionale Zuschnittmodell 2.1.1 bis 2.1.7 zu genau einem zweidimensionalen Zuschnittteil 1.1.1 bis 1.1.7.

In einem **zweiten Verfahrensschritt S2** werden Zuschnittzeichnungsflächen Z1, Z4 in einer Arbeitsdatei abgelegt, welche die Anordnung der Zuschnittzeichnungsflächen Z1, Z4 in einer vorbestimmten Darstellungsform beschreibt. Jede der Zuschnittzeichnungsflächen Z1, Z4 umfasst eine zweidimensionale Darstellung der Zuschnittteile des zur jeweiligen Zuschnittzeichnungsfläche Z1, Z4 zugeordneten Bezugteils 1.1 bis 1.4. In der vorbestimmten Darstellungsform ist eine Zuschnittzeichnungsfläche Z1, Z4 jeweils einem Bezugteil 1.1 bis 1.4 zugeordnet und so dimensioniert, dass jeweils alle zu diesem Bezugteil 1.1 bis 1.4 zugeordneten Zuschnittteile 1.1.1 bis 1.1.7 in einem Abbildungsmaßstab von 1:1 auf der Zuschnittzeichnungsfläche Z1, Z4 darstellbar sind. Beispielsweise ist die Zuschnittzeichnungsfläche Z1, Z4 so dimensioniert, dass alle Zuschnittteile 1.1.1 bis 1.1.7 in einem Abbildungsmaßstab von 1:1 dargestellt werden können. In einer Ausführungsform der Erfindung werden die Zuschnittteile 1.1.1 bis 1.1.7 gemäß der vorbestimmten Darstellungsform in einer symmetrischen Anordnung komplett auf der Zuschnittzeichnungsfläche Z1, Z4 abgebildet. Damit ist in vorteilhafter Weise eine optimale gestalterische Arbeit möglich. Es ist ein weiterer Vorteil einer solchen vorbestimmten Darstellungsform nach dieser Ausführungsform der Erfindung, dass damit die Erzeugung und Darstellung von beispielsweise quadratischen, Farbinformationen über einen roten, einen grünen und einen blauen Farbkanal umfassenden Texturmustern ermöglicht wird, welche in einem nachfolgenden fünften Verfahrensschritt S5 interaktiv auf dem korrespondierenden dreidimensionalen Zuschnittmodell abgebildet werden kann.

Aus den in einer Zuschnittzeichnungsfläche Z1, Z4 dargestellten Zuschnittteile 1.1.1 bis 1.1.7 werden quadratisch Referenztexturen mit einer fest vorgegebenen Kantenlänge abgeleitet. Die fest vorgegebene Kantenlänge ist so gewählt, dass sie bei einer Darstellung in einem Abbildungsmaßstab von 1:1 auf einem Monitor 4096 Pixel umfasst.

In einem **dritten Verfahrensschritt S3** werden die dreidimensionalen Zuschnittmodelle 2.1.1 bis 2.1.7 mit den auf Zuschnittzeichnungsflächen Z1, Z4 angeordneten zweidimensionalen Zuschnittteilen 1.1.1 bis 1.1.7 über eine UV - Transformation UVT oder auch UV - Generation verknüpft. Unter einer UV - Transformation UVT wird hierbei eine Abbildungsvorschrift verstanden, mit der zu jedem Punkt in einem dreidimensionalen Zuschnittmodell 2.1.1 bis 2.1.7 genau ein korrespondierender Punkt in einem zugeordneten zweidimensionalen Zuschnittteil 1.1.1 bis 1.1.7 festgelegt ist. Eine solche UV - Generation weist jedem über drei Koordinaten in einem Modell- oder XYZ - Koordinatensystem (x,y,z) gegebenen Modellpunkt einen über zwei Koordinaten in einem Zuschnittzeichnungsflächen- oder UV - Koordinatensystem (u,v) gegebenen Zuschnittzeichnungsflächenpunkt zu. Somit ist eine Darstellung eines dreidimensionalen Sitzbezugmodells 2 bestehend aus Zuschnittmodellen 2.1.1 bis 2.1.7 als eine auch als Zuschnittmodellabwicklung 3.1.3, 3.1.6 bezeichnete zweidimensionale Zeichnung möglich. Mittels einer solchen UV - Transformation UVT wird ein dreidimensionales Zuschnittmodell 2.1.3, 2.1.6 im XYZ - Koordinatensystem (x,y,z) auf eine korrespondierende zweidimensionale Zuschnittmodellabwicklung 3.1.3, 3.1.6 im UV - Koordinatensystem (u,v) abgebildet.

Aus dem Stand der Technik sind Verfahren zur Bestimmung und Parametrisierung von UV - Transformationen bekannt, mit denen eine regelmäßige, beispielsweise eine gitterartige, Anordnung von Modellpunkten in eine ebenfalls möglichst regelmäßige, beispielsweise nur geringfügig verzerrte ebenfalls gitterartige Anordnung von Zuschnittzeichnungsflächenpunkten transformiert wird.

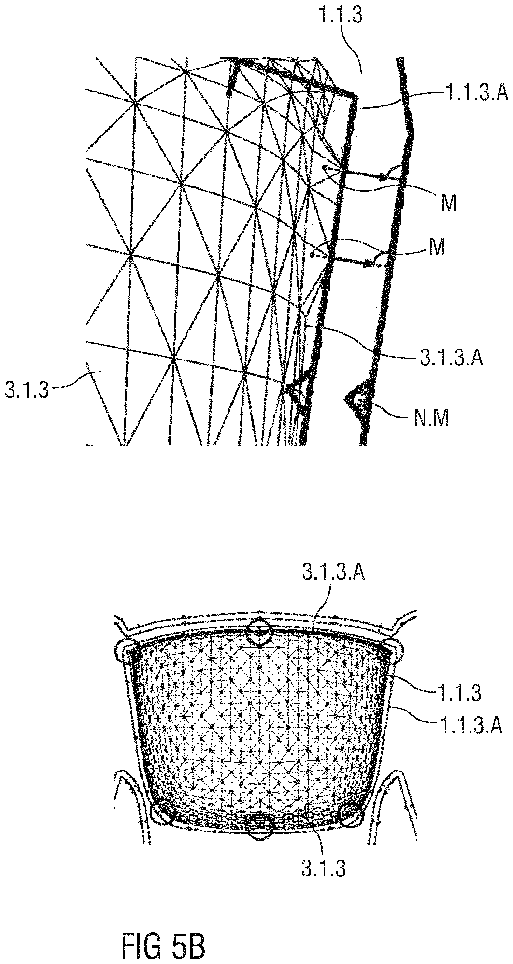

Jedem dreidimensionalen Zuschnittmodell 2 wird die korrespondierende, im zweiten Verfahrensschritt S2 erstellte Referenztextur zugewiesen und somit in der Darstellung des dreidimensionalen Zuschnittmodells 2 sichtbar. Durch die Anwendung der UV - Transformation UVT auf diese zugewiesene Referenztextur wird diese Referenztextur ebenfalls in der zweidimensionalen Zuschnittmodellabwicklung im UV - Koordinatensystem (u,v) sichtbar. Damit ist es in vorteilhafter Weise möglich, die Außenkontur eines dreidimensionalen Zuschnittmodells 2.1.1 bis 2.1.7 zu erfassen. Eine solche Abwicklungsaußenkontur 3.1.3.A, 3.1.6.A ergibt sich, wenn die Oberfläche eines korrespondierenden Zuschnittmodells 2.1.3, 2.1.6 bei minimaler Verformung auf eine plane Ebene ausgebreitet oder abgewickelt wird. Unter Zuhilfenahme einer Referenztextur können korrespondierende Punkte auf einem Zuschnittteil 1.1.1 bis 1.1.7 und auf dem zugeordneten Zuschnittmodell 2.1.1 bis 2.1.7 abgebildet werden. So können in vorteilhafter Weise ausgewählte Punkte der Referenztextur als Markierungspunkt M zur Anpassung der UV - Transformation UVT verwendet werden, wie bei Figur 5b noch näher beschrieben.

Erfindungsgemäß wird eine mittels eines solchen, aus dem Stand der Technik bekannten Verfahrens bestimmte UV - Transformation UVT in einem **ersten Teilschritt S3.1** des dritten Verfahrensschritts zur Erzeugung einer ersten zweidimensionalen Zuschnittmodellabwicklung 3.1.3, 3.1.6 für jedes dreidimensionales Zuschnittmodell 2.1.1 bis 2.1.7 verwendet. Abhängig von der Geometrie des dreidimensionalen Zuschnittmodells 2.1.3, 2.1.6 ist diese erste zweidimensionale Zuschnittmodellabwicklung 3.1.3, 3.1.6 im Allgemeinen ähnlich, aber nicht deckungsgleich zu dem zum Zuschnittmodell 2.1.3, 2.1.6 korrespondierenden Zuschnittteil 1.1.3, 1.1.6. Figur 5a zeigt dies genauer am Beispiel der Zuschnittmodellabwicklungen 3.1.3, 3.1.6, die den Zuschnittsmodellen 2.1.3, 2.1.6 als Teil des inneren Rückenlehnenbezugsmodells 2.1 zugeordnet sind.

Erfindungsgemäß wird in einem **zweiten Teilschritt S3.2** des dritten Verfahrensschritts die erste Zuschnittmodellabwicklung 3.1.3, 3.1.6 so verändert, dass eine verbesserte, beispielsweise eine genauere Überdeckung zum korrespondierenden Zuschnittteil 1.1.3, 1.1.6 erreicht wird. Beispielsweise ist es möglich, einen nahe der Abwicklungsaußenumrandung 3.1.3.A der Zuschnittmodellabwicklung 3.1.3 gelegenen Markierungspunkt M auf die Zuschnittteilaußenumrandung 1.1.3.A des korrespondierenden Zuschnittteils 1.1.3 zu verschieben, wie in Figur 5b näher gezeigt. In vorteilhafter Weise wird ein solcher Markierungspunkt M dabei im Wesentlichen senkrecht zu der dem Markierungspunkt M nächstgelegenen Tangente an die Zuschnittteilaußenumrandung 1.1.3.A des korrespondierenden Zuschnittteils 1.1.3 verschoben.

Aus dem Stand der Technik sind ferner restringierte Verfahren zur Bestimmung und Parametrisierung von UV - Transformationen bekannt, bei denen eine regelmäßige, beispielsweise eine gitterartige, Anordnung von Modellpunkten in eine ebenfalls möglichst regelmäßige, beispielsweise nur geringfügig verzerrte ebenfalls gitterartige Anordnung von Zuschnittzeichnungsflächenpunkten transformiert wird, wobei mindestens ein vorbestimmter Modellpunkt exakt auf mindestens einen korrespondierenden vorbestimmten Zuschnittzeichnungsflächenpunkt abgebildet wird.

Erfindungsgemäß wird eine UV - Transformation, welche mittels eines solchen, aus dem Stand der Technik bekannten restringierten Verfahrens bestimmt wurde, in einem **dritten Teilschritt S3.3** des dritten Verfahrensschritts zur Erzeugung einer zweiten zweidimensionalen Zuschnittmodellabwicklung 3.1.3, 3.1.6 jeweils für das korrespondierende dreidimensionale Zuschnittmodell 2.1.3, 2.1.6 verwendet. Abhängig von der Geometrie des dreidimensionalen Zuschnittmodells 2.1.3, 2.1.6 weist diese zweite zweidimensionale Zuschnittmodellabwicklung 3.1.3, 3.1.6 im Allgemeinen eine größere Überdeckung zu dem zum Zuschnittmodell 2.1.3, 2.1.6 korrespondierenden Zuschnittteil 1.1.3, 1.1.6 auf.

Durch iterative Wiederholung des zweiten und dritten Teilschritts S3.2, S3.3 des dritten Verfahrensschritts sind weitere Zuschnittmodellabwicklungen 3.1.3, 3.1.6, also eine dritte, vierte usw. Zuschnittmodellabwicklung, erzeugbar, welche in der Abwicklungsaußenkontur 3.1.3.A, 3.1.6.A eine immer geringere Abweichung von der Zuschnittteilaußenkontur 1.1.3.A, 1.1.6.A des korrespondierenden Zuschnittteils 1.1.3, 1.1.6 aufweisen. Liegt die Abweichung zwischen den Außenkonturen der Zuschnittmodellabwicklung 3.1.3, 3.1.6 und des korrespondierenden Zuschnittteils 1.1.3, 1.1.6 unterhalb einer vorgegebenen Toleranz, beispielsweise unterhalb der Fertigungstoleranz beim Vernähen der Zuschnittteile 1.1.1 bis 1.1.7 zu einem Bezugteil 1.1 bis 1.4, so kann die Folge iterativer Wiederholungen des zweiten und dritten Teilschritts S3.2, S3.3 des dritten Verfahrensschritts abgebrochen werden.

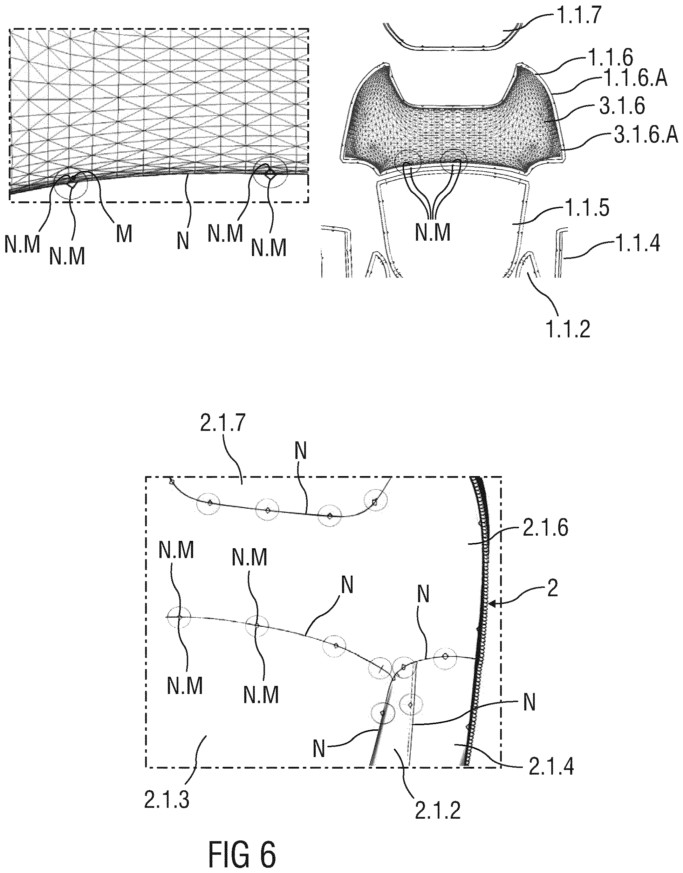

In einem anschließenden **vierten Teilschritt S3.4** des dritten Verfahrensschritts werden sichtbare Nähmarkierungen N.M, die auf Zuschnitteilen 1.1.1 bis 1.1.7 beidseits einer verbindenden Naht N gegenüberliegend angebracht sind, in Überdeckung gebracht, wie in Figur 6 näher dargestellt. Hierzu werden Markierungspunkte M, welche auf oder nahe bei gegenüberliegenden sichtbaren Nähmarkierungen N.M beidseits einer zwei Zuschnittmodelle 2.1.1 bis 2.1.7 verbindenden Naht N liegen, in den Zuschnittmodellabwicklungen 3.1.3, 3.1.6, dieser Zuschnittmodelle 2.1.1 bis 2.1.7 so verschoben, dass die sichtbaren Nähmarkierungen N.M in einer zur Nahtrichtung senkrechten Richtung näherungsweise fluchten, wobei die insgesamt an allen Markierungspunkten M vorgenommene Verschiebung möglichst gering sein soll.

In vorteilhafter Weise wird mit der Ausrichtung sichtbarer Nähmarkierungen N.M an möglichst flachen Zuschnittmodellen 2.1.1 bis 2.1.7 begonnen, welche eine möglichst geringe dreidimensionale Überwölbung aufweisen, und im Folgenden schrittweise für gegenüberliegende Zuschnittmodelle 2.1.1 bis 2.1.7 mit zunehmender Überwölbung fortgesetzt.

Im Ergebnis des dritten Verfahrensschritts S3 wird somit eine finale UV - Transformation UVT (UV - Generation) ermittelt, die für jedes dreidimensionale Zuschnittsmodell 2.1.1 bis 2.1.7 eine finale Zuschnittmodellabwicklung 3.1.3, 3.1.6 erzeugt, wobei diese finale Zuschnittmodellabwicklung 3.1.3, 3.1.6 mit einer möglichst geringen Abweichung das korrespondierende dreidimensionale Zuschnittsmodell 2.1.1 bis 2.1.7 überdeckt und zugleich in der Außenkontur 3.1.3.A, 3.1.6.A im Rahmen einer vorbestimmten Toleranz mit der Außenkontur 1.1.3.A, 3.1.3.A des korrespondierenden Zuschnittteils 1.1.1 bis 1.1.7 übereinstimmt und wobei sichtbare Nähmarkierungen N.M bei mittels einer Naht N verbundenen dreidimensionalen Zuschnittsmodellen 2.1.1 bis 2.1.7 in einer zur Nahtrichtung senkrechten Richtung näherungsweise fluchten.

In einem **vierten Verfahrensschritt S4** wird die zweidimensionale Darstellung eines auf einer Zuschnittzeichnungsfläche Z1, Z4 angeordneten Zuschnittteils 1.1.1 bis 1.1.7 mittels der im dritten Verfahrensschritt S3 für dieses Zuschnittteil 1.1.1 bis 1.1.7 ermittelten finalen UV - Transformation UVT mit der dreidimensionalen Darstellung des korrespondierenden dreidimensionalen Zuschnittsmodells 2.1.1 bis 2.1.7 verknüpft. Aus dem Stand der Technik sind Texturdarstellungswerkzeuge TW bekannt, mit denen ein rechteckiger, beispielsweise mittels Pixelkoordinaten festgelegter Monitorbereich für eine Überlagerung auf eine dreidimensional dargestellte Oberfläche, beispielsweise eine Oberfläche eines dreidimensionalen Zuschnittmodells 2.1.1 bis 2.1.7, ausgewählt werden kann. Ein Muster oder eine andere grafische Darstellung in diesem Monitorbereich wird als Textur auf eine dreidimensionale Darstellung eines dreidimensionalen Modells übertragen, sofern eine finale UV - Transformation UVT ermittelt wurde, welche eine Korrespondenz zwischen mindestens einem Ausschnitt dieses Monitorbereichs und dem dreidimensionalen Zuschnittmodells 2.1.1 bis 2.1.7vermittelt. Beispielsweise ist es möglich, Koordinaten der Eckpixel einer Zuschnittszeichnungsfläche Z1, Z4 auszuwählen und einem solchen, aus dem Stand der Technik bekannten Texturdarstellungswerkzeug TW zu übergeben, wobei die Zuschnittzeichnungsfläche Z1, Z4 beispielsweise Zuschnitteile eines inneren Rückenlehnenbezugs 1.1 umfasst.

Mittels eines solchen Texturdarstellungswerkzeugs TW ist es dann möglich, auf die Zuschnittzeichnungsfläche Z1, Z4 aufgebrachte Darstellungen, beispielsweise ein Muster oder eine Grafik, auf die Oberfläche derjenigen dreidimensionalen Zuschnittmodelle 2.1.1 bis 2.1.7 abzubilden, welche zu den auf der Zuschnittzeichnungsfläche Z1, Z4 dargestellten Zuschnittteilen 1.1.1 bis 1.1.7 korrespondieren. Beispielsweise ist es auf diese Weise möglich, die Oberfläche eines dreidimensional dargestellten Zuschnittmodells 2.1.1 bis 2.1.7 für den inneren Rückenlehnenbezug 1.1 mit Mustern zu versehen, welche auf die korrespondierenden, in der Zuschnittzeichnungsfläche Z1, Z4 angeordneten zweidimensionalen Zuschnittteile 1.1.1 bis 1.1.7 eingezeichnet werden. In vorteilhafter Weise wird dabei durch Anwendung der vorab ermittelten UV - Generationen, welche, mittels der Zuschnittmodellabwicklung 3.1.3, 3.1.6, jeweils näherungsweise die Korrespondenz zwischen einem dreidimensionalen Zuschnittmodell 2.1.3, 2.1.6 und einem zugeordneten zweidimensionalen Zuschnittteil 1.1.3, 1.1.6 beschreibt, eine realistische Verformung des zweidimensional eingezeichneten Musters auf dem dreidimensionalen Zuschnittmodell 2.1.3, 2.1.6 erzielt.

In analoger Weise können weitere Zuschnittzeichnungsflächen mittels eines solchen Texturdarstellungswerkzeugs TW für die Darstellung von Mustern oder Grafiken auf den Oberflächen dreidimensionaler Zuschnittmodelle 2.1.1 bis 2.1.7 ausgewählt werden, welche über die dieser weiteren Zuschnittzeichnungsflächen zugeordneten Zuschnittteile 1.1.1 bis 1.1.7 aufgebracht werden.

Größe, Anzahl und Anordnung solcher Zuschnittzeichnungsflächen Z1, Z4 können dabei beliebig gewählt und an die Erfordernisse eines konkreten Arbeitsablaufs bei der Gestaltung von Sitzbezügen 1 angepasst werden.

In einem fünften Verfahrensschritt S5 werden gestaltgebende Zeichnungen, beispielsweise als Muster oder Ornamente ausgebildete grafische Gestaltungselemente G, auf die in der mindestens einen Zuschnittzeichnungsfläche Z1, Z4 dargestellten zweidimensionalen Zuschnittteile 1.1.1 bis 1.1.7 aufgebracht. Mittels des eingerichteten Texturdarstellungswerkzeugs TW werden diese gestaltgebenden Zeichnungen als Oberfläche der zugeordneten dreidimensionalen Zuschnittmodelle 2.1.1 bis 2.1.7 dargestellt. In vorteilhafter Weise ist so eine Überprüfung der korrekten Ausrichtung und Lage und der Proportionalität aller auf die zweidimensionalen Zuschnittteile 1.1.1 bis 1.1.7 aufgebrachten Gestaltungselemente G möglich. Somit kann das zeit- und materialaufwändige Korrigieren solcher aufgebrachter Gestaltungselemente G, das nach dem Stand der Technik die physikalische Anfertigung eines Sitzbezuges 1 und dessen Anbringen an einem Fahrzeugsitz erfordert, eingespart werden.

Figur 5a zeigt schematisch die Zerlegung eines dreidimensionalen Sitzbezugmodells 2, welches mittels Digitalisierung aus einem serienhaften physikalischen Modell oder einem Prototyp des Fahrzeugsitzes 1 gewonnen wurde, in dreidimensionale Bezugteilmodelle 2.1 bis 2.4. Jedes Bezugteilmodell ist einem Bezugteil 1.1 bis 1.4 zugeordnet. Ein Bezugteilmodell 2.1 bis 2.4 wird entlang der bei der Digitalisierung ebenfalls erfassten Nähte N in dreidimensionale Zuschnittmodelle 2.1.1 bis 2.1.7 aufgetrennt, wie am Beispiel des inneren Rückenlehnenbezugsmodells 2.1 exemplarisch dargestellt.

Im Teilschritt S3.1 des dritten Verfahrensschritts S3 wird zu einem dreidimensionalen Zuschnittmodell 2.1.1 bis 2.1.7 eine zweidimensionale Zuschnittmodellabwicklung 3.1.3, 3.1.6 erzeugt, die dreidimensionale Modellpunktkoordinaten (XYZ - Koordinaten) auf zweidimensionale Zuschnittzeichnungsflächenpunktkoordinaten (UV - Koordinaten) abbildet. Dies ist für ein mittig auf dem Rückenlehnenbezugsmodell 2.1 angeordnetes zentrales Rückenlehnenzuschnittmodell 2.1.3 exemplarisch gezeigt.

Das Aufbringen eines Sitzbezugs 1 auf einen Fahrzeugsitz bewirkt im Allgemeinen je nach Krümmung des Fahrzeugsitzes örtliche Unterschiede in der Dehnung des Sitzbezugsstoffs, welche bei der Anwendung der UV - Transformation UVT nicht bekannt sind und daher nicht berücksichtigt werden. Auf Grund dieser Unterschiede stimmt die aus der UV - Transformation (UV - Generation) UVT gewonnene Zuschnittmodellabwicklung 3.1.3, 3.1.6 im Allgemeinen nicht exakt mit dem korrespondierenden Zuschnittteil 1.1.1 bis 1.1.7 überein. Beispielsweise weicht die Abwicklungsaußenkontur 3.1.3.A der Zuschnittmodellabwicklung 3.1.3 des zentralen Rückenlehnenzuschnittmodells 2.1.3 von der Zuschnittteilaußenkontur 1.1.3.A des korrespondierenden Zuschnittteils 1.1.3 ab.

Wie in Figur 5b näher dargestellt, wird im zweiten Teilschritt S3.2 des dritten Verfahrensschritts S3 ein nahe der Außenumrandung 3.1.3.A der Zuschnittmodellabwicklung 3.1.3 gelegener Markierungspunkt M auf die Außenumrandung 1.1.3.A des korrespondierenden Zuschnittteils 1.1.3 verschoben. Es ist besonders vorteilhaft, einen solchen Markierungspunkt M im Wesentlichen senkrecht zu der nächstgelegenen Tangente an die Zuschnittteilaußenkontur 1.1.3.A des korrespondierenden Zuschnittteils 1.1.3 zu verschieben, um eine Überdeckung der Außenkonturen 1.1.3.A, 3.1.3.A der Zuschnittmodellabwicklung 3.1.3 und des korrespondierenden Zuschnittteils 1.1.3 bei möglichst kurzem Verschiebeweg des Markierungspunkts M und entsprechend möglichst geringer Verzerrung der Zuschnittmodellabwicklung 3.1.3 zu erreichen. Es ist möglich, mehrere Markierungspunkte M an verschiedenen Positionen auf der Außenkontur 3.1.3.A, 3.1.6.A einer Zuschnittmodellabwicklung 3.1.3, 3.1.6 festzulegen und entlang eines jeweils möglichst kurzen Verschiebewegs auf die jeweilige Zuschnittteilaußenkontur 1.1.3.A, 1.1.6.A zu verschieben. Nach erfolgter Verschiebung wird der mindestens eine Markierungspunkt M auf der korrespondierenden Zuschnittteilaußenkontur 1.1.3.A, 1.1.6.A fixiert. Es wird eine UV - Transformation UVT bestimmt, welche aus einem Zuschnittmodell 2.1.3, 2.1.6 eine Zuschnittmodellabwicklung 3.1.3, 3.1.6 erzeugt, bei der der mindestens eine Markierungspunkt M auf die fixierte Position entlang der korrespondierenden Zuschnittteilaußenkontur 1.1.3.A, 1.1.6.A abgebildet wird.

Die Abfolge des ersten und zweiten Teilschritts S3.1, S3.2 des dritten Verfahrensschritts wird wiederholt, bis eine vollständige oder mindestens eine im Rahmen unvermeidbarer Fertigungstoleranzen, beispielsweise beim Vernähen von Zuschnittteilen 1.1.1 bis 1.1.7, ausreichende Überdeckung einer Zuschnittmodellabwicklung 3.1.3, 3.1.6 mit dem korrespondierenden Zuschnittteil 1.1.3, 1.1.6 erreicht wurde.

Es ist möglich, dass die im dritten Teilschritt S3.3 für jedes Zuschnittmodell 2.1.1 bis 2.1.7 individuell ermittelten UV - Transformation UVT so beschaffen sind, dass beidseits einer Naht N eng benachbarte Modellpunkte auf Zuschnittzeichnungsflächenpunkte abgebildet werden, welche in Nahtrichtung gegeneinander versetzt sind. Damit würden in umgekehrter Weise Gestaltungselemente G, welche in der Abbildung mehrerer Zuschnittteile 1.1.1 bis 1.1.7 auf zusammengefügte dreidimensionale Zuschnittmodelle 2.1.1 bis 2.1.7 versatzfrei erscheinen, in der tatsächlichen physikalischen Anordnung, mit anderen Worten: beim Vernähen dieser Zuschnittteile 1.1.1 bis 1.1.7, einen Versatz entlang einer verbindenden Naht N aufweisen.

Zur Vermeidung eines solchen Versatzes ist ein Anschluss oder Abgleich der individuellen UV - Transformation UVT für mittels einer Naht N verbundene Zuschnittmodelle 2.1.1 bis 2.1.7 erforderlich. Hierzu wird, wie in Figur 6 im Detail gezeigt, mindestens ein Markierungspunkt M in mindestens einer der Zuschnittmodellabwicklungen 3.1.5, 3.1.6 korrespondierend zu benachbarten Zuschnittteilen 1.1.5, 1.1.6 einseitig oder beidseits einer Naht N auf oder bei einer Nähmarkierung N.M angelegt. Ferner werden diese benachbarten Zuschnittteile 1.1.5, 1.1.6 mit den aufgebrachten Nähmarkierungen N.M entsprechend der ermittelten UV - Transformation UVT auf die Oberfläche der korrespondierenden Zuschnittmodellabwicklungen 3.1.5, 3.1.6 abgebildet.

Hierbei ist zunächst ein Versatz in Nahtrichtung zwischen der Position von Nähmarkierungen N.M auf einem ersten Zuschnittmodell 2.1.6 gegenüber korrespondierenden, gegenüberliegenden Nähmarkierungen N.M auf dem entlang einer Naht N gegenüberliegenden zweiten Zuschnittmodell 2.1.5 möglich.

Ein solcher Versatz wird behoben, indem der mindestens eine in den Zuschnittmodellabwicklungen 3.1.5, 3.1.6 um die Nähmarkierungen N.M angelegte Markierungspunkt M entlang der Naht N in der dem Versatz entgegen gesetzten Richtung auf jeweils eine neue Position verschoben wird. Für jedes der verbundenen Zuschnittmodelle 2.1.5, 2.1.6 wird sodann eine UV - Transformation UVT bestimmt, welche einem Markierungspunkt M die jeweils neue Position zuordnet. Mittels der neu bestimmten UV - Transformation UVT werden Modellpunkte (XYZ - Koordinaten) auf Zuschnittzeichnungsflächenpunktkoordinaten (UV - Koordinaten) neu abgebildet und somit die benachbarten Zuschnittteile 1.1.5, 1.1.6 mit den aufgebrachten Nähmarkierungen N.M neu auf die Oberfläche der korrespondierenden Zuschnittmodellabwicklungen 3.1.5, 3.1.6 bei vermindertem Versatz zwischen gegenüberliegenden Nähmarkierungen abgebildet. Durch wiederholtes Verschieben von jeweils mindestens einem Markierungspunkt M in mindestens einer der benachbarten Zuschnittmodellabwicklungen 3.1.5, 3.1.6 und nachfolgende Ermittlung der UV - Transformationen (UV - Generationen) für diese Zuschnittmodellabwicklungen 3.1.5, 3.1.6 wird der verbleibende Versatz so weit verringert, dass alle einander beidseits der verbindenden Naht N gegenüberliegende Nähmarkierungen N.M mindestens näherungsweise fluchten.

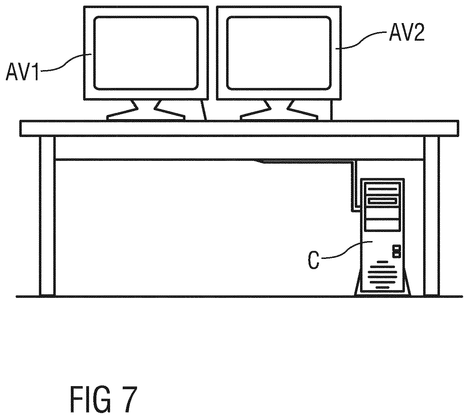

Figur 7 zeigt schematisch eine erste Anzeigevorrichtung AV1 und eine zweite Anzeigevorrichtung AV2 zur Durchführung des erfindungsgemäßen Verfahrens. Die Anzeigevorrichtungen AV1, AV2 können als Monitore ausgebildet sein und werden von einer Verarbeitungseinrichtung C angesteuert, die beispielsweise als Computer ausgebildet sein kann, der beispielsweise mindestens zwei Grafikkarten mit je einem Grafikausgang oder eine Dual Head Grafikkarte mit zwei Grafikausgängen aufweist.

Auf dem Computer C werden ein CAD-Werkzeug CAD zum rechnergestützten Entwurf (Computer Aided Design, CAD), ein Zeichenwerkzeug ZW zum Zeichnen, vorzugsweise zum Erstellen von grafischen Gestaltungselementen G, sowie ein Texturdarstellungswerkzeug TW als Datenverarbeitungsprogramme abgearbeitet. Mittels des CAD - Werkzeugs CAD wird ein dreidimensionales Sitzbezugmodell 2, bestehend aus Bezugteilmodellen 2.1 bis 2.4 mit Zuschnittmodellen 2.1.1 bis 2.1.7, auf der ersten Anzeigevorrichtung AV1 dargestellt. Mittels des Zeichenwerkzeugs ZW werden die zu dem Sitzbezugmodell 2 korrespondierenden Zuschnittteile 1.1.1 bis 1.1.7 auf Zuschnittzeichnungsflächen Z1, Z4 , die auf der zweiten Anzeigevorrichtung AV2 angeordnet sind, dargestellt und mit Gestaltungselementen G versehen. Mittels des Texturdarstellungswerkzeugs TW werden Gestaltungselemente G der Zuschnittteile 1.1.1 bis 1.1.7 auf die korrespondierenden Zuschnittmodelle 2.1.1 bis 2.1.7 übertragen und durch das CAD - Werkzeug CAD auf der ersten Anzeigevorrichtung AV1 dargestellt.

In vorteilhafter Weise ist es mit den zwei Anzeigevorrichtungen AV1, AV2 möglich, Gestaltungselemente G auf Zuschnittteile 1.1.1 bis 1.1.7 aufzubringen und instantan, insbesondere ohne Wechsel in ein anderes Datenverarbeitungsprogramm, die Anordnung und die gestalterische Wirksamkeit der Gestaltungselemente G auf dem dreidimensionalen Sitzbezugmodell 2 zu verfolgen und zu bewerten.

### Bezugszeichenliste

- 1: Sitzbezug
- 1.1: innerer Rückenlehnenbezug, Bezugteil
- 1.1.1 bis 1.1.7: Zuschnittteile
- 1.1.3.A, 1.1.6.A: Zuschnittteilaußenkontur
- 1.2: Sitzkissenbezug, Bezugteil
- 1.3: äußerer Rückenlehnenbezug, Bezugteil
- 1.4: Kopfstützenbezug, Bezugteil
- 2: Sitzbezugmodell
- 2.1: inneres Rückenlehnenbezugmodell, Bezugteilmodell
- 2.1.1 bis 2.1.7: Zuschnittmodell
- 2.1.3: zentrales Rückenlehnenzuschnittmodell
- 2.1.6: unteres Rückenlehnenzuschnittmodell
- 2.2: Sitzkissenbezugmodell, Bezugteilmodell
- 2.3: äußeres Rückenlehnenbezugmodell, Bezugteilmodell
- 2.4: Kopfstützenbezugmodell, Bezugteilmodell
- 3.1.3, 3.1.6: Zuschnittmodellabwicklung
- 3.1.3.A, 3.1.6.A: Abwicklungsaußenkontur
- (u,v): UV - Koordinatensystem
- (x,y,z): XYZ - Koordinatensystem
- AV1, AV2: erste, zweite Anzeigevorrichtung, Ausgabegerät
- C: Computer, Verarbeitungseinheit
- CAD: CAD - Werkzeug (Entwurfswerkzeug)
- G: Gestaltungselement
- M: Markierungspunkt
- N: Naht
- N.M: Nähmarkierung
- TW: Texturdarstellungswerkzeug
- Z1, Z4: Zuschnittzeichnungsfläche
- ZAB: Zuschnittzeichnungsflächenausgabebereich
- ZW: Zeichenwerkzeug
- S1 bis S5: erster bis fünfter Verfahrensschritt
- S3.1 bis S3.4: erster bis vierter Teilschritt des dritten Verfahrensschritts
- UVT: UV - Transformation

## Patentansprüche

1. Verfahren zur Anordnung grafischer Gestaltungselemente (G) auf einem Sitzbezug (1) eines Fahrzeugsitzes, wobei ein dreidimensionales Sitzbezugmodell (2) eines zweidimensionalen Sitzbezuges (1) eines realen Fahrzeugsitzes erfasst wird und dieses Sitzbezugmodell (2) mittels einer UV-Transformation in eine zweidimensionale Zuschnittmodellabwicklung (3.1.3, 3.1.6) umgewandelt wird, in welcher zweidimensionale Gestaltungselemente (G) erstellt werden, wobei die erstellten Gestaltungselemente (G) zusätzlich in dem dreidimensionalen Sitzbezugmodell (2) ausgegeben werden, das Verfahren umfassend
- in einem ersten Verfahrensschritt (S1) die Erstellung eines dreidimensionalen Sitzbezugmodells (2) mit mindestens zwei dreidimensionalen, mittels mindestens einer Naht (N) verbundenen Zuschnittmodellen (2.1.1 bis 2.1.7) und die Visualisierung des dreidimensionalen Sitzbezugmodells (2) mittels eines computergestützten Entwurfswerkzeugs (CAD),
- in einem zweiten Verfahrensschritt (S2) die Anordnung von zu den mindestens zwei Zuschnittmodellen (2.1.1 bis 2.1.7) korrespondierenden Zuschnittteilen (1.1.1 bis 1.1.7) in mindestens einer Zuschnittzeichnungsfläche (Z1, Z4), welche in einer vorbestimmten Darstellungsform auf einem Zuschnittzeichnungsflächenausgabebereich (ZAB) eines Ausgabegeräts (AV1, AV2) mittels eines Zeichenwerkzeugs (ZW) dargestellt wird,
- in einem dritten Verfahrensschritt (S3) die Erstellung mindestens einer UV - Transformation (UVT) zur Abbildung dreidimensionaler Modellpunktkoordinaten des Zuschnittmodells (2.1.1 bis 2.1.7) auf zweidimensionale Zuschnittzeichnungsflächenpunktkoordinaten einer Zuschnittmodellabwicklung (3.1.3, 3.1.6), die in der Abwicklungsaußenkontur (3.1.3.A, 3.1.6.A) im Wesentlichen mit der Zuschnittteilaußenkontur (1.1.3.A, 1.1.6.A) des korrespondierenden Zuschnittteils (1.1.3, 1.1.6) übereinstimmt,
- in einem vierten Verfahrensschritt (S4) die Zuordnung mindestens eines Zuschnittzeichnungsflächenausgabebereichs (ZAB) zur Darstellung von Texturen auf dem dreidimensionalen Sitzbezugmodell (2) mittels eines mit dem computergestützten Entwurfswerkzeug verbundenen Texturdarstellungswerkzeugs (TW) zur Übertragung von Texturen aus einem vorbestimmten Monitorbereich sowie
- in einem fünften Verfahrensschritt (S5) die Erstellung und Positionierung mindestens eines grafischen Gestaltungselements (G) mittels des Zeichenwerkzeugs (ZW) auf mindestens einem Zuschnittteil (1.1.1 bis 1.1.7), wobei mittels des mit dem computergestützten Entwurfswerkzeug verbundenen Texturdarstellungswerkzeugs (TW) eine Abbildung des grafischen Gestaltungselements (G) gemäß der UV - Transformation (UVT) des korrespondierenden Zuschnittsmodells (2.1.1 bis 2.1.7) auf dem dreidimensionalen Sitzbezugmodell (2) dargestellt wird,
wobei im dritten Verfahrensschritt (S3)
- in einem ersten Teilschritt (S3.1) zu mindestens einem dreidimensionalen Zuschnittmodell (2.1.1 bis 2.1.7) mittels einer UV - Transformation (UVT) eine erste zweidimensionale Zuschnittmodellabwicklung (3.1.3, 3.1.6) erstellt wird,
- in einem zweiten Teilschritt (S3.2) die Abwicklungsaußenkontur (3.1.3.A, 3.1.6.A) der Zuschnittmodellabwicklung (3.1.3, 3.1.6) durch Verschiebung mindestens eines Markierungspunkts (M) an die Zuschnittteilaußenkontur (1.1.3.A, 1.1.6.A) des korrespondierenden Zuschnittteils (1.1.3, 1.1.6) angepasst wird,
- in einem dritten Teilschritt (S3.3) die Parameter der UV - Transformation (UVT) und somit die Abwicklungsaußenkontur (3.1.3.A, 3.1.6.A) der Zuschnittmodellabwicklung (3.1.3, 3.1.6) an die Verschiebung des mindestens einen Markierungspunkts (M) angepasst werden,
wobei der zweite und dritte Teilschritt (S3.2, S3.3) wiederholt werden, bis die Abweichung der Abwicklungsaußenkontur (3.1.3.A, 3.1.6.A) der Zuschnittmodellabwicklung (3.1.3, 3.1.6) von der korrespondierenden Zuschnittteilaußenkontur (1.1.3.A, 1.1.6.A) des Zuschnittteils (1.1.3, 1.1.6) ein vorbestimmtes Abweichungsmaß unterschreitet.

2. Verfahren nach Anspruch 1,
**dadurch gekennzeichnet, dass** ein dreidimensionales Sitzbezugmodell (2) durch Abtastung einer Oberfläche eines mit einem Sitzbezug (1) bezogenen Fahrzeugsitzes und mindestens einer Naht (N) erstellt und nachfolgend entlang der mindestens einen Naht (N) in dreidimensionale Zuschnittmodelle (2.1.1 bis 2.1.7) aufgetrennt wird.

3. Verfahren nach einem der vorhergehenden Ansprüche,
**dadurch gekennzeichnet, dass** im dritten Verfahrensschritt (S3) in einem vierten Teilschritt (S3.4) sichtbare Nähmarkierungen (N.M) auf Zuschnittteilen (1.1.1 bis 1.1.7) beidseits einer verbindenden Naht (N) entlang einer zur Nahtrichtung senkrechten Fluchtrichtung näherungsweise in Flucht gebracht werden.

4. Verfahren nach einem der vorhergehenden Ansprüche,
**dadurch gekennzeichnet, dass** der Sitzbezug (1) einen inneren Rückenlehnenbezug (1.1), einen Sitzkissenbezug (1.2), einen äußeren Rückenlehnenbezug (1.3) sowie einen Kopfstützenbezug (1.4) umfasst, wobei die jeweils einem Bezugteil (1.1 bis 1.4) zugeordneten Zuschnittteile (1.1.1 bis 1.1.7) auf jeweils einer Zuschnittzeichnungsfläche (Z1, Z4) angeordnet sind.

5. Verfahren nach einem der vorhergehenden Ansprüche,
**dadurch gekennzeichnet, dass** die Zuschnittteile (1.1.1 bis 1.1.7) auf der mindestens einen Zuschnittzeichnungsfläche (Z1, Z4) in einem Abbildungsmaßstab 1:1 abgebildet sind.

6. Verfahren nach Anspruch 5,
**dadurch gekennzeichnet, dass** mindestens eine Zuschnittzeichnungsfläche (Z1, Z4) quadratisch ist und eine Kantenlänge von 4096 Pixeln aufweist.

7. Verfahren nach einem der vorhergehenden Ansprüche,
**dadurch gekennzeichnet, dass** die Zuschnittteile (1.1.1 bis 1.1.7) auf mindestens eine Zuschnittzeichnungsfläche (Z1, Z4) symmetrisch angeordnet dargestellt sind.

8. Vorrichtung zur Anordnung grafischer Gestaltungselemente auf einem Sitzbezug (1) eines Fahrzeugsitzes, umfassend eine Verarbeitungseinheit (C) und mindestens eine mit der Verarbeitungseinheit (C) verbundene Anzeigevorrichtung (AV1, AV2), wobei die Verarbeitungseinheit (C) zur Durchführung eines Verfahrens nach einem der vorhergehenden Ansprüche eingerichtet und mittels mindestens eines Datenverarbeitungsprogramms als computergestütztes Entwurfswerkzeug (CAD), als Zeichenwerkzeug (ZW) sowie als Texturdarstellungswerkzeug (TW) ausgebildet ist und die Visualisierung eines dreidimensionalen Sitzbezugmodells (2) und der erstellten Gestaltungselemente (G) in diesem dreidimensionalen Sitzbezugmodell (2) auf der mindestens einen Anzeigevorrichtung (AV1, AV2) erfolgt, **dadurch gekennzeichnet, dass** das Texturdarstellungswerkzeug (TW) zur Übertragung von mit dem Zeichenwerkzeug (ZW) erstellten zweidimensionalen Gestaltungselementen (G) in das computergestützte Entwurfswerkzeug (CAD) unter Berücksichtigung einer einer UV - Transformation (UVT) zur Abbildung dreidimensionaler Modellpunktkoordinaten des Zuschnittmodells (2.1.1 bis 2.1.7) auf zweidimensionale Zuschnittzeichnungsflächenpunktkoordinaten einer Zuschnittmodellabwicklung (3.1.3, 3.1.6), die in der Abwicklungsaußenkontur (3.1.3.A, 3.1.6.A) im Wesentlichen mit der Zuschnittteilaußenkontur (1.1.3.A, 1.1.6.A) des korrespondierenden Zuschnittteils (1.1.3, 1.1.6) übereinstimmt, ausgebildet ist.

## Claims

1. Method for arranging graphical design elements (G) on a seat lining (1) of a vehicle seat, wherein a three-dimensional seat lining model (2) of a two-dimensional seat lining (1) of a real vehicle seat is acquired and said seat lining model (2) is converted by way of a UV transformation into a two-dimensional cutting model development (3.1.3, 3.1.6) in which two-dimensional design elements (G) are created, wherein the created design elements (G) are additionally output in the three-dimensional seat lining model (2), the method comprising:
- in a first method step (S1), the creation of a three-dimensional seat lining model (2) with at least two three-dimensional cutting models (2.1.1 to 2.1.7) connected by way of at least one seam (N), and the visualization of the three-dimensional seat lining model (2) by way of a computer-aided design tool (CAD),
- in a second method step (S2), the arrangement of cutting parts (1.1.1 to 1.1.7), which correspond to the at least two cutting models (2.1.1 to 2.1.7), in at least one cutting drawing area (Z1, Z4) which is displayed in a predetermined display form on a cutting drawing area output region (ZAB) of an output unit (AV1, AV2) by way of a drawing tool (ZW),
- in a third method step (S3), the creation of at least one UV transformation (UVT) for the mapping of three-dimensional model point coordinates of the cutting model (2.1.1 to 2.1.7) onto two-dimensional cutting drawing area point coordinates of a cutting model development (3.1.3, 3.1.6) which, in the development outer contour (3.1.3.A, 3.1.6.A), substantially coincides with the cutting part outer contour (1.1.3.A, 1.1.6.A) of the corresponding cutting part (1.1.3, 1.1.6),
- in a fourth method step (S4), the assignment of at least one cutting drawing area output region (ZAB) to the display of textures on the three-dimensional seat lining model (2) by way of a texture display tool (TW), which is connected to the computer-aided design tool, for the transfer of textures from a predetermined monitor region, and
- in a fifth method step (S5), the creation and positioning of at least one graphical design element (G) by way of the drawing tool (ZW) on at least one cutting part (1.1.1 to 1.1.7), wherein, by way of the texture display tool (TW) connected to the computer-aided design tool, a mapping of the graphical design element (G) in accordance with the UV transformation (UVT) of the corresponding cutting model (2.1.1 to 2.1.7) is displayed on the three-dimensional seat lining model (2), wherein, in the third method step (S3),
- in a first sub-step (S3.1), for at least one three-dimensional cutting model (2.1.1 to 2.1.7), a first two-dimensional cutting model development (3.1.3, 3.1.6) is created by way of a UV transformation (UVT),
- in a second sub-step (S3.2), the development outer contour (3.1.3.A, 3.1.6.A) of the cutting model development (3.1.3, 3.1.6) is adapted to the cutting part outer contour (1.1.3.A, 1.1.6.A) of the corresponding cutting part (1.1.3, 1.1.6) by displacement of at least one marking point (M),
- in a third sub-step (S3.3), the parameters of the UV transformation (UVT) and thus the development outer contour (3.1.3.A, 3.1.6.A) of the cutting model development (3.1.3, 3.1.6) are adapted to the displacement of the at least one marking point (M),
wherein the second and third sub-steps (S3.2, S3.3) are repeated until the deviation of the development outer contour (3.1.3.A, 3.1.6.A) of the cutting model development (3.1.3, 3.1.6) from the corresponding cutting part outer contour (1.1.3.A, 1.1.6.A) of the cutting part (1.1.3, 1.1.6) falls below a predetermined deviation value.

2. Method according to Claim 1,
**characterized in that** a three-dimensional seat lining model (2) is created by sampling of a surface of a vehicle seat lined with a seat lining (1) and of at least one seam (N) and is subsequently divided up along the at least one seam (N) into three-dimensional cutting models (2.1.1 to 2.1.7).

3. Method according to either of the preceding claims,
**characterized in that**, in the third method step (S3), in a fourth sub-step (S3.4), visible sewing markings (N.M) on cutting parts (1.1.1 to 1.1.7) on both sides of a connecting seam (N) are brought approximately into alignment along an alignment direction perpendicular to the seam direction.

4. Method according to one of the preceding claims,
**characterized in that** the seat lining (1) comprises an inner backrest lining (1.1), a seat cushion lining (1.2), an outer backrest lining (1.3) and a headrest lining (1.4), wherein the cutting parts (1.1.1 to 1.1.7) respectively assigned to a lining part (1.1 to 1.4) are arranged on a respective cutting drawing area (Z1, Z4) .

5. Method according to one of the preceding claims,
**characterized in that** the cutting parts (1.1.1 to 1.1.7) are mapped onto the at least one cutting drawing area (Z1, Z4) on a mapping scale of 1:1.

6. Method according to Claim 5,
**characterized in that** at least one cutting drawing area (Z1, Z4) is square and has an edge length of 4096 pixels.

7. Method according to one of the preceding claims,
**characterized in that** the cutting parts (1.1.1 to 1.1.7) are displayed so as to be arranged symmetrically on at least one cutting drawing area (Z1, Z4).

8. Device for the arrangement of graphical design elements on a seat lining (1) of a vehicle seat, comprising a processing unit (C) and at least one display device (AV1, AV2) which is connected to the processing unit (C), wherein the processing unit (C) is set up to carry out a method according to one of the preceding claims and is, by way of at least one data processing program, formed as a computer-aided design tool (CAD), as a drawing tool (ZW) and as a texture display tool (TW), and the visualization of a three-dimensional seat lining model (2) and of the created design elements (G) in said three-dimensional seat lining model (2) is performed on the at least one display device (AV1, AV2), **characterized in that** the texture display tool (TW) is designed for the transfer of two-dimensional design elements (G), created by way of the drawing tool (ZW), into the computer-aided design tool (CAD) taking into consideration a UV transformation (UVT) for the mapping of three-dimensional model point coordinates of the cutting model (2.1.1 to 2.1.7) onto two-dimensional cutting drawing area point coordinates of a cutting model development (3.1.3, 3.1.6) which, in the development outer contour (3.1.3.A, 3.1.6.A), substantially coincides with the cutting part outer contour (1.1.3.A, 1.1.6.A) of the corresponding cutting part (1.1.3, 1.1.6).

## Revendications

1. Procédé d'agencement d'éléments de conception graphiques (G) sur une housse de siège (1) d'un siège de véhicule, dans lequel on saisit un modèle de housse de siège tridimensionnel (2) d'une housse de siège bidimensionnelle (1) d'un siège de véhicule réel et l'on convertit ce modèle de housse de siège (2) au moyen d'une transformation UV en un développement de modèle de découpe bidimensionnel (3.1.3, 3.1.6), dans lequel on crée des éléments de conception bidimensionnels (G), dans lequel on génère en outre les éléments de conception (G) dans le modèle de housse de siège tridimensionnel (2), le procédé comprenant
- dans une première étape du procédé (S1), la création d'un modèle de housse de siège tridimensionnel (2) avec au moins deux modèles de découpe tridimensionnels (2.1.1 à 2.1.7) assemblés l'un à l'autre au moyen d'au moins une couture (N) et la visualisation du modèle de housse de siège tridimensionnel (2) au moyen d'un outil de conception assistée par ordinateur (CAD),
- dans une deuxième étape du procédé (S2), l'agencement de parties de découpe (1.1.1 à 1.1.7) correspondant auxdits au moins deux modèles de découpe (2.1.1 à 2.1.7) dans au moins une surface de dessin de découpe (Z1, Z4), qui est représentée dans une forme de représentation prédéterminée sur une zone de génération de surface de dessin de découpe (ZAB) d'un appareil de génération (AV1, AV2) au moyen d'un outil de dessin (ZW),
- dans une troisième étape du procédé (S3), la création d'au moins une transformation UV (UVT) pour la représentation de coordonnées de point de modèle tridimensionnelles du modèle de découpe (2.1.1 à 2.1.7) sur des coordonnées de point de surface de dessin de modèle bidimensionnelles d'un développement de modèle de découpe (3.1.3, 3.1.6), qui concorde essentiellement par le contour extérieur du développement (3.1.3.A, 3.1.6.A) avec le contour extérieur de découpe (1.1.3.A, 1.1.6.A) de la partie de découpe correspondante (1.1.3, 1.1.6),
- dans une quatrième étape du procédé (S4), l'agencement d'au moins une zone de génération de surface de dessin de découpe (ZAB) pour la représentation de textures sur le modèle de housse tridimensionnel (2) au moyen d'au moins un outil de représentation de texture (TW) relié à l'outil de conception assistée par ordinateur pour le transfert de textures à partir d'une zone de moniteur prédéterminée, ainsi que
- dans une cinquième étape du procédé (S5), la création et le positionnement d'au moins un élément de conception graphique (G) au moyen de l'outil de dessin (ZW) sur au moins une partie de découpe (1.1.1 à 1.1.7), dans lequel, au moyen de l'outil de représentation de texture (TW) relié à l'outil de conception assistée par ordinateur, on représente une image de l'élément de conception graphique (G) selon la transformation UV (UVT) du modèle de découpe correspondant (2.1.1 à 2.1.7) sur le modèle de housse de siège tridimensionnel (2),
dans lequel, dans la troisième étape du procédé (S3),
- dans une première étape partielle (S3.1), on crée à au moins un modèle de découpe tridimensionnel (2.1.1 à 2.1.7) au moyen d'une transformation UV (UVT) un premier développement de modèle de découpe bidimensionnel (3.1.3, 3.1.6),
- dans une deuxième étape partielle (S3.2), on adapte le contour extérieur de développement (3.1.3.A, 3.1.6.A) du développement du modèle de découpe (3.1.3, 3.1.6) au contour extérieur de partie de découpe (1.1.3.A, 1.1.6.A) de la partie de découpe correspondante (1.1.3, 1.1.6) par déplacement d'au moins un point de marquage (M),
- dans une troisième étape partielle (S3.3), on adapte les paramètres de la transformation UV (UVT) et ainsi le contour extérieur de développement (3.1.3.A, 3.1.6.A) du développement de modèle de découpe (3.1.3, 3.1.6) au déplacement dudit au moins un point de marquage (M),
dans lequel on répète la deuxième et la troisième étape partielle (S3.2, S3.3) jusqu'à ce que l'écart entre le contour extérieur de développement (3.1.3.A, 3.1.6.A) du développement de modèle de découpe (3.1.3, 3.1.6) et le contour extérieur de partie de découpe correspondant (1.1.3.A, 1.1.6.A) de la partie de découpe (1.1.3, 1.1.6) soit inférieur à une dimension d'écart prédéterminée.

2. Procédé selon la revendication 1, **caractérisé en ce que** l'on crée un modèle de housse de siège tridimensionnel (2) par balayage d'une surface d'un siège de véhicule revêtu d'une housse de siège (1) et d'au moins une couture (N) et on le divise ensuite en modèles de découpe tridimensionnels (2.1.1 à 2.1.7) le long de ladite au moins une couture (N).

3. Procédé selon l'une quelconque des revendications précédentes, **caractérisé en ce que** dans la troisième étape du procédé (S3) on applique dans une quatrième étape partielle (S3.4) des marques de couture visibles (N.M) sur des parties de découpe (1.1.1 à 1.1.7) de part et d'autre d'une couture d'assemblage (N) approximativement en alignement le long d'une direction d'alignement perpendiculaire à la direction de la couture.

4. Procédé selon l'une quelconque des revendications précédentes, **caractérisé en ce que** la housse de siège (1) comprend une housse de dossier intérieure (1.1), une housse de coussin de siège (1.2), une housse de dossier extérieure (1.3) ainsi qu'une housse d'appuie-tête (1.4), dans lequel les parties de découpe (1.1.1 à 1.1.7) respectivement associées à une partie de housse (1.1 à 1.4) sont disposées respectivement sur une surface de dessin de découpe (Z1, Z4).

5. Procédé selon l'une quelconque des revendications précédentes, **caractérisé en ce que** les parties de découpe (1.1.1 à 1.1.7) sont représentées sur ladite au moins une surface de dessin de découpe (Z1, Z4) à une échelle de représentation de 1:1.

6. Procédé selon la revendication 5, **caractérisé en ce qu'**au moins une surface de dessin de découpe (Z1, Z4) est carrée et présente une longueur de côté de 4096 pixels.

7. Procédé selon l'une quelconque des revendications précédentes, **caractérisé en ce que** les parties de découpe (1.1.1 à 1.1.7) sont représentées en une disposition symétrique sur au moins une surface de dessin de découpe (Z1, Z4).

8. Dispositif d'agencement d'éléments de conception graphiques sur une housse de siège (1) d'un siège de véhicule, comprenant une unité de traitement (C) et au moins un dispositif d'affichage (AV1, AV2) relié à l'unité de traitement (C), dans lequel l'unité de traitement (C) est conçue pour l'exécution d'un procédé selon l'une quelconque des revendications précédentes et est configurée au moyen d'au moins un programme de traitement de données comme outil de conception assistée par ordinateur (CAD), comme outil de dessin (ZW) ainsi que comme outil de représentation de texture (TW) et la visualisation d'un modèle de housse tridimensionnel (2) et des éléments de conception créés (G) dans ce modèle de housse de siège tridimensionnel (2) est effectuée sur ledit au moins un dispositif d'affichage (AV1, AV2),
**caractérisé en ce que** l'outil de représentation de texture (TW) est configuré pour le transfert d'éléments de conception bidimensionnels (G) créés avec l'outil de dessin (ZW) dans l'outil de conception assistée par ordinateur (CAD) en tenant compte d'une transformation UV (UVT) pour la représentation de coordonnées de points de modèle tridimensionnelles du modèle de découpe (2.1.1 à 2.1.7) sur des coordonnées de points de surface de dessin de découpe bidimensionnelles d'un développement de modèle de découpe (3.1.3, 3.1.6), qui coïncide essentiellement par le contour extérieur de développement (3.1.3.A, 3.1.6.A) avec le contour extérieur de partie de découpe (1.1.3.A, 1.1.6.A) de la partie de découpe correspondante (1.1.3, 1.1.6).
